(19) **Europäisches Patentamt** / **European Patent Office** / **Office européen des brevets**

(11) **EP 4 167 455 A1**

(12) **EUROPEAN PATENT APPLICATION**

(43) Date of publication:
**19.04.2023  Bulletin 2023/16**

(21) Application number: **22201717.0**

(22) Date of filing: **14.10.2022**

(51) International Patent Classification (IPC):
*H02M 1/32* (2007.01)      *H02M 3/155* (2006.01)
*H02M 3/335* (2006.01)      *H02M 1/00* (2006.01)

(52) Cooperative Patent Classification (CPC):
**H02M 1/32; H02M 1/0025; H02M 3/155;**
**H02M 3/335**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.10.2021  CN 202111205518**

(71) Applicant: **Silergy Semiconductor Technology**
**(Hangzhou) Ltd**
**Zhejiang 310051 (CN)**

(72) Inventors:
• **CHEN, Zhan**
  **Hangzhou City, Zhejiang Province, 310051 (CN)**
• **HUANG, Qiukai**
  **Hangzhou City, Zhejiang Province, 310051 (CN)**
• **JIN, Jin**
  **Hangzhou City, Zhejiang Province, 310051 (CN)**
• **ZHANG, Guiying**
  **Hangzhou City, Zhejiang Province, 310051 (CN)**

(74) Representative: **Viering, Jentschura & Partner**
**mbB**
**Patent- und Rechtsanwälte**
**Am Brauhaus 8**
**01099 Dresden (DE)**

(54) **SWITCH-MODE CONVERTER, CONTROL METHOD FOR THE SAME, AND CONTROL CIRCUIT FOR THE SAME**

(57)    A switch-mode converter, a control method for the same, and a control circuit for the same are provided. An overcurrent reference threshold is determined according to an output voltage sampling signal and a predetermined overcurrent protection curve. When an output current sampling signal and the overcurrent reference threshold meet a predetermined criterion, an overcurrent protection triggering signal is generated to trigger the switch-mode converter to enter a protection state. Hence, the overcurrent protection is provided for the switch-mode converter to reduce safety risks on the condition that Limited Power Source (LPS) requirements are met.

S100

selecting an overcurrent reference threshold according to an output voltage sampling signal indicative of an output voltage of the switch-mode converter and the overcurrent reference threshold meets the current requirements of LPS

S200

generating an overcurrent protection triggering signal in response to that the output current sampling signal indicative of the output current of the switch-mode converter and the overcurrent reference threshold meet a predetermined criterion, thereby triggering the switch-mode converter to enter a protection state

**FIG. 12**

**Description**

<u>BACKGROUND</u>

**1. Field of the Disclosure**

The present disclosure relates to power electronics and, more particularly, to a switch-mode converter, a control method for the same, and a control circuit for the same.

**2. Description of Related Art**

Switch-mode converters operating under different output voltages have to meet Limited Power Source (LPS) requirements in order to reduce safety risks. LPS specifies output voltage, output current and output power of switch-mode converters. An overcurrent protection circuit is provided in the switch-mode converter to protect a converter-dependent circuit against damage caused by overly high output current (i.e., overcurrent) or overly high output power. For example, the switch-mode converter is controlled to be turned off as soon as the output current exceeds a certain value, so as to reduce safety risks.

Conventional overcurrent protection methods according to prior art exceeds the limitation of the output current ruled by LPS when the output voltage is lower and the value of the overcurrent protection point is high. Namely, Conventional overcurrent protection methods according to prior art fail to meet LPS requirements and the overcurrent protection need.

<u>SUMMARY</u>

According to the aforementioned description, the objective of the embodiment of the present disclosure is to provide a switch-mode converter and a control method and a control circuit thereof, which may provide the overcurrent protection to the switch-mode converter to reduce the safety risks under the condition that the limited power requirement is satisfied.

In the first aspect, an embodiment of the disclosure provides a control method, applicable to a switch-mode converter, the control method comprising the steps of:

obtaining an overcurrent reference threshold according to an output voltage sampling signal indicative of an output voltage of the switch-mode converter; and

generating an overcurrent protection triggering signal in response to that an output current sampling signal indicative of an output current of the switch-mode converter and the overcurrent reference threshold meet a predetermined criterion, thereby triggering the switch-mode converter to enter a protection state.

In some embodiments, the control method further comprises: controlling a power switch (M1) of the switch-mode converter to be turned off in response to generating a valid overcurrent protection triggering signal (Sovp), thereby triggering the switch-mode converter to enter the protection state; and in response to generating an invalid overcurrent protection triggering signal (Sovp), generating a switch control signal to control the power switch (M1) to be turned on or turned off, such that an output voltage and/or an output current of the switch-mode converter meets predetermined needs.

In some embodiments, the overcurrent reference threshold (Viout_ocp) is configured to gradually decrease as the output voltage increases within a predetermined range of the output voltage.

In some embodiments, the output voltage sampling signal is obtained by sampling the output voltage of the switch-mode converter, and the output current sampling signal is obtained by sampling the output current of the switch-mode converter.

In some embodiments, the output voltage sampling signal is determined according to an auxiliary voltage sampling signal when the switch-mode converter is configured as an isolated switch-mode converter, and the auxiliary voltage sampling signal is obtained by sampling a voltage across two terminals of an auxiliary winding coupled to a primary winding of a transformer in the isolated switch-mode converter.

In some embodiments, the output current sampling signal is obtained by the steps of: obtaining a demagnetization time sampling signal configured to indicate that the transformer is in a demagnetization duration according to the auxiliary voltage sampling signal (Vsen) of the transformer; obtaining the demagnetization time from the demagnetization time sampling signal; obtaining a current peak sampling signal representing a peak value of a primary current flowing through the primary winding; and determining the output current sampling signal (Viout_psr) that is proportional to a product of the current peak sampling signal and the demagnetization time, and inversely proportional to a switching cycle.

In some embodiments, the predetermined criterion is that the output current sampling signal is greater than the overcurrent reference threshold for predetermined time.

In some embodiments, the step of determining the output current sampling signal according to the demagnetization time sampling signal and the primary current peak sampling signal comprises:

keeping an input signal of a filter circuit of the current determining circuit as the primary current peak sampling signal within the demagnetization time of the transformer in one switching cycle;

controlling the input signal of the filter circuit of the current determining circuit to be zero when an end of the demagnetization time is detected; and

generating the output current sampling signal (Viout_psr) at an output terminal of the filter circuit of the current determining circuit.

In the second aspect, an embodiment of the disclosure provides a control circuit, applicable to a switch-mode converter, the control circuit comprises:

an overcurrent protection circuit comprising a reference threshold generating circuit configured to obtain an overcurrent reference threshold according to an output voltage sampling signal indicative of an output voltage of the switch-mode converter, and a triggering signal generating circuit configured to generate an overcurrent protection triggering signal in response to that an output current sampling signal indicative of an output current of the switch-mode converter and the overcurrent reference threshold meet a predetermined criterion; and

a control signal generating circuit configured to control the switch-mode converter to enter a protection state in response to receiving the overcurrent protection triggering signal.

In some embodiments, the control signal generating circuit is further configured to generate a switch control signal to control a power switch of the switch-mode converter to be turned on or turned off in response to receiving an invalid overcurrent protection triggering signal, such that an output voltage and/or output current of the switch-mode converter meets predetermined needs.

In some embodiments, the overcurrent reference threshold (Viout_ocp) is configured to gradually decrease as the output voltage increases within a predetermined range of the output voltage.

In some embodiments, the output voltage sampling signal is obtained by sampling the output voltage of the switch-mode converter, and the output current sampling signal is obtained by sampling the output current of the switch-mode converter.

In some embodiments, when the switch-mode converter is configured as an isolated switch-mode converter, the reference threshold generating circuit comprises:

an output voltage sampling circuit configured to obtain the output voltage sampling signal according to an auxiliary voltage sampling signal, with the boost voltage sampling signal being obtained by sampling a voltage across two terminals of an auxiliary winding coupled to a primary winding of a transformer in the isolated switch-mode converter; and

a threshold determining circuit configured to determine the overcurrent reference threshold according to the output voltage sampling signal and the overcurrent protection curve.

In some embodiments, the overcurrent protection circuit further comprises an output current detection circuit configured to obtain a demagnetization time sampling signal configured to indicate that the transformer is in a demagnetization duration according to the auxiliary voltage sampling signal, obtain the demagnetization time from the demagnetization time sampling signal, obtain a current peak sampling signal representing a peak value of a primary current flowing through the primary winding, and determine the output current sampling signal to be proportional to a product of the current peak sampling signal and the demagnetization time, and inversely proportional to a switching cycle.

In some embodiments, the output current detection circuit comprises:

a demagnetization time sampling circuit configured to obtain a demagnetization time sampling signal according to an auxiliary voltage sampling signal, the demagnetization time sampling signal indicating that the transformer of the switch-mode converter is in a demagnetization duration;

a current peak sampling circuit configured to obtain a current peak sampling signal according to the primary current sampling signal; and

a current determining circuit configured to determine the output current sampling signal according to the demagnetization time sampling signal and the current peak sampling signal.

In some embodiments, the predetermined criterion is that the output current sampling signal is greater than the overcurrent reference threshold for predetermined time.

In some embodiments, the triggering signal generating circuit comprises:

a comparison circuit configured to obtain a result of comparison of the output current sampling signal and the overcurrent reference threshold; and

a timing circuit configured to output the overcurrent protection triggering signal in response to the comparison result that the output current sampling signal is greater than the overcurrent reference threshold for predetermined time.

In some embodiments, the current determining circuit comprises:

a first input terminal configured to receive the current peak sampling signal;

a first output terminal configured to output the output current sampling signal;

a first switch;

a filter circuit, being coupled in series with the first switch between the first input terminal and the first output terminal, and comprising at least one capacitor;

a second switch, being coupled in series with the first switch between the first input terminal and a ground terminal; and

a logic circuit configured to control the first switch to be turned on and the second switch to be turned off within the demagnetization duration of the transformer in one switching cycle so as to keep an input signal of the filter circuit as the current peak sampling signal, and control the input signal of the filter circuit of the current determining circuit(113) to be zero when an end of the demagnetization duration is detected, thereby triggering the filter circuit to output the output current sampling signal (Viout_psr).

In some embodiment, the logic circuit is configured as an RS trigger, wherein the RS trigger has a set terminal for receiving a switch control signal and a reset terminal for receiving the demagnetization time sampling signal, in order to generate output signals to respectively control the first and second switches.

In the third aspect, an embodiment of the disclosure provides a switch-mode converter, and the switch-mode converter comprises:

a power stage circuit comprising at least one power switch (M1) connecter in series with the primary winding (Lp); and

the control circuit (U1) is configured to generate an overcurrent reference threshold (Viout_ocp) according to an output voltage sampling signal(Vout_sample) indicative of an output voltage of the switch-mode converter, generate an overcurrent protection triggering signal (Sovp) in response to that an output current sampling signal (Viout_psr) indicative of an output current of the switch-mode converter and the overcurrent reference threshold meet a predetermined criterion, and control the switch-mode converter to enter a protection state in response to receiving the overcurrent protection triggering signal (Sovp).

In an embodiment of the disclosure, an overcurrent reference threshold is determined according to an output voltage sampling signal and a predetermined overcurrent protection curve. When an output current sampling signal and the overcurrent reference threshold meet a predetermined criterion, an overcurrent protection triggering signal is generated, thereby allowing the switch-mode converter to enter a protection state. Hence, the overcurrent protection is provided for the switch-mode converter to reduce safety risks on the condition that Limited Power Source (LPS) requirements are met.

## BRIEF DESCRIPTION OF THE DRAWINGS

For a more complete understanding of the aforesaid and other objectives, features and advantages of the disclosure, reference is now made to the following description of embodiments of the disclosure, taken in conjunction with the accompanying drawings, in which:

FIG. 1 is a circuit diagram of a switch-mode converter according to an embodiment of the disclosure;

FIG. 2 is a circuit diagram of the switch-mode converter according to another embodiment of the disclosure;

FIG. 3 is a schematic view of a control circuit according to an embodiment of the disclosure;

FIG. 4 is a signal waveform graph of the switch-mode converter according to an embodiment of the disclosure;

FIG. 5 is a circuit diagram of an overcurrent protection circuit according to an embodiment of the disclosure;

FIG. 6 is a circuit diagram of a current determining circuit according to an embodiment of the disclosure;

FIG. 7 is a schematic view of an overcurrent protection curve according to an embodiment of the disclosure;

FIG. 8 is a schematic view of an overcurrent protection curve according to another embodiment of the disclosure;

FIG. 9 is a schematic view of an overcurrent protection curve according to yet another embodiment of the disclosure;

FIG. 10 is a circuit diagram of a reference threshold generating circuit according to an embodiment of the disclosure;

FIG. 11 is a schematic view of an LPS curve according to an embodiment of the disclosure; and

FIG. 12 is a schematic view of a process flow of a control method according to an embodiment of the disclosure.

## DETAILED DESCRIPTION

The disclosure is hereunder described in accordance with embodiments, but the disclosure is not restrictive to the embodiments. A detailed description of the disclosure is presented below to fully describe specific details. Persons skilled in the art are able to fully understand the disclosure even without the description of the details. Well-known methods, processes, process flows, components and circuits are not described in detail in order not to confuse them with essential technical features of the disclosure.

Persons skilled in the art understand that accompanying drawings are merely illustrative and are not necessarily drawn to scale.

The term "circuit" refers to a conducting loop formed by at least one component or sub-circuit electrically connected or electromagnetically connected. When a component is "connected to" another component or "connected between" two nodes, it is directly coupled or connected to another component, or an intervening component exists, with the components being connected physically or logically or bonded together. By contrast, when a component is "directly coupled to" or "directly connected to" another component, there is no intervening component between the two components.

Unless otherwise specified in the context, the terms "comprise," "include" and the like used herein shall be construed to mean "comprise" (i.e., "including but not limited to") rather than "exclusive" or "exhaustive."

The terms "first," "second" and the like used herein merely serve differentiation purposes but shall not be interpreted to mean to expound or imply relative importance. Unless otherwise specified, the term "multiple" used herein means "two or more."

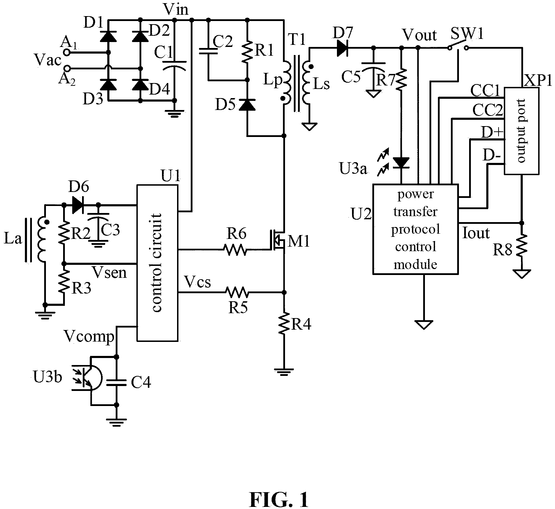

FIG. 1 is a circuit diagram of a switch-mode converter according to an embodiment of the disclosure. In the embodiment illustrated by FIG. 1, the switch-mode converter is exemplified by an isolated switch-mode converter and comprises a primary-side circuit and a secondary-side circuit. The primary-side circuit and the secondary-side circuit are connected by a transformer T1. The transformer T1 transforms electrical signals outputted from the primary-side circuit and then outputs the electrical signals to the secondary-side circuit. The transformer T1 comprises a primary winding Lp of the primary-side circuit and a secondary winding Ls of the secondary-side circuit.

The primary-side circuit performs rectification and filtering on the received external AC electrical signal Vac to obtain an DC signal Vin. The DC signal Vin are outputted to the secondary-side circuit through the transformer T1 (the primary winding Lp and a secondary winding are coupled together). The secondary-side circuit performs rectification and filtering on the received electrical signals to obtain an output voltage Vout, and then outputs the output voltage Vout through output port XP1.

The primary-side circuit comprises a power stage circuit, an auxiliary voltage sampling circuit, a primary current sampling circuit, a control circuit U1 and related circuits. The power stage circuit comprises input terminals $A_1$ and $A_2$, a primary rectification circuit, a primary winding Lp and a power switch M1.

The input terminals $A_1$ and $A_2$ are configured to receive the external electrical signal Vac. The external electrical signal Vac is an AC electrical signal. The embodiments of the disclosure are not restrictive of the external electrical signals, and the external electrical signal may be 220V or 380V AC utility power or any other AC electrical signals. The embodiments of the disclosure are not restrictive of the way that the input terminals $A_1$ and $A_2$ receive the electrical signal, and the external electrical signal may be received by connecting the input terminals A1 and A2 directly to an external power source interface through a plug, or may be received by wirelessly connecting the input terminals A1 and A2.

The primary rectification circuit is connected to the input terminals $A_1$ and $A_2$ and configured to rectify the external electrical signal Vac. In the embodiment illustrated by FIG. 1, the primary rectification circuit is a full-bridge rectification circuit comprising diodes D1, D2, D3 and D4.

It should be understood that the rectification circuit in this embodiment is not restricted to what is shown in FIG. 1, and a rectification circuit with any other structure, such as half-bridge rectification, is also applicable. The disclosure is exemplified by diode rectification, but the rectification circuit may also operate by synchronous rectification to rectify the external electrical signals with controlled switches.

Furthermore, the primary-side circuit further comprises a capacitor C1 connected to the output terminals of the primary rectification circuit and configured to filter electrical signals outputted from the primary rectification circuit. The external electrical signal Vac after undergoing rectification and filtering is a signal Vin.

The power switch M1 and the primary winding Lp are series-connected between the output terminal and the ground terminal of the primary rectification circuit. The power switch M1 is controlled to turned on and turned off, so as to control the output current and/or the output voltage of the primary winding Lp.

In the present embodiment, the power switch M1 is a transistor Qa, for example, MOSFET (metal-oxide-semiconductor field-effect transistor). It should be understood that a bipolar junction transistor (BJT) or an insulated gate bipolar transistor (IGBT) may be also applicable to the embodiments of the disclosure.

Furthermore, the primary-side circuit further comprises a capacitor C2, a resistor R1 and a diode D5. The capacitor C2 and the resistor R1 form a parallel-connected circuit. The parallel-connected circuit and the diode D5 are series-connected to form a series-connected circuit. The series-connected circuit is connected to two terminals of the primary winding Lp to form an RCD buffer circuit for absorbing leakage inductance energy and avoiding a voltage peak.

It should be understood that the power stage circuit in the embodiments of the disclosure is not restricted to what is shown in FIG. 1, and may be replaced by any power converters with any other structures, for example, a switch-mode converter having boost topology, buck topology or buck-boost topology, as long as the magnitude of the output current and/or the output voltage is regulated by controlling the duty ratio of the power switch of the switch-mode converter or switching frequency.

Furthermore, the auxiliary voltage sampling circuit may be configured to obtain an auxiliary voltage sampling signal. The auxiliary voltage sampling signal is indicative of the voltage across the two terminals of an auxiliary winding La. The voltage across the two terminals of the auxiliary winding may be also used to supply electric power to any other circuits after the auxiliary voltage sampling circuit is activated.

The auxiliary voltage sampling circuit further comprises a resistor R2 and a resistor R3. The resistor R2 and the resistor R3 are series-connected to the two terminals of the auxiliary winding to constitute a voltage division network, so as to output an auxiliary voltage sampling signal Vsen at the connection point of the resistor R2 and the resistor R3.

The primary current sampling circuit may be configured to obtain a primary current sampling signal Vcs and comprises a resistor R4 connected between the power switch M1 and the ground terminal to obtain the primary current sampling signal Vcs, which is transmitted to the control circuit through a resistor R5. The primary current sampling signal Vcs is indicative of a primary current Ia flowing through the primary winding Lp.

The control circuit U1 is configured to generate a switch control signal for controlling the switching frequency and the duty ratio of the power switch M1, thereby controlling the output current and/or the output voltage of the switch-mode converter. The control circuit is also configured to control the power switch M1 to be turned off when the overcurrent of the output current of the switch-mode converter is detected, such that the switch-mode converter does not output electrical signals.

In the present embodiment, the secondary-side circuit comprises a secondary winding Ls, a secondary rectification circuit, a secondary filter circuit, a power transfer protocol control module U2 and related circuits.

The secondary winding Ls is configured to be coupled to the primary winding Lp to receive electrical signals transmitted by the primary winding.

The secondary rectification circuit is configured to rectify the electrical signals outputted from the secondary winding Ls. In the embodiment illustrated by FIG. 1, the secondary rectification circuit is a diode D7 and thus performs half-wave rectification. It should be understood that the secondary rectification circuit in the embodiments of the disclosure is not restricted to the half-wave rectification shown in FIG. 1, and any rectification circuits with any other structures (for example, bridge rectification or full-wave rectification) are also applicable. The disclosure is exemplified by diode rectification, but the rectification circuit may also operate by synchronous rectification to rectify the external electrical signals with controlled switches.

The secondary filter circuit is configured to filter the electrical signals outputted from the secondary rectification circuit. As shown in FIG. 1, filtering is carried out with a capacitor C5.

The secondary-side circuit further comprises optical coupler equipments (OCEP) U3a, U3b for feeding back a compensation signal Vcomp from the secondary-side circuit to the primary-side circuit, such that the control circuit U1 controls the duty ratio and/or the switching frequency of the power switch M1 according to the compensation signal , such that the output current and the output voltage of the switch-mode converter satisfy a selected current parameter and a selected voltage parameter.

In some embodiments, the secondary-side circuit further comprises a load switch SW1 connected between the output port XP1 and the secondary rectification circuit and the load switch SW1 is configured to be controlled to be turned on or turned off. When the load switch SW1 is turned on, the output voltage Vout charges a connected charging apparatus through the output port XP1. When the load switch SW1 is turned off, the output port XP1 does not output electrical signals.

The power transfer (PD) protocol control module U2 communicates with the connected charging apparatus through the output port XP1. In some embodiments, the output port XP1 is a USB type-C interface. FIG. 1 shows only four pins CC1, CC2, D+ and D- of the output port XP1. Only after the handshaking of the PD protocol succeeds, an apparatus connected to the output port XP1 can transmit data, for example, upgrading voltage and current levels. Hence, when the output port XP1 of the switch-mode converter is connected to the charging apparatus, the charging apparatus queries a register inside the power transfer protocol control module U2 through the output port XP1 to determine the output voltage and the output current allowed by the switch-mode converter, and then selects voltage parameters and current parameters, and informs the power transfer protocol control module U2 of the voltage parameter, and the current parameter.

The power transfer protocol control module U2 detects the output current Iout and the output voltage Vout in real time, and turns off the load switch SW1 as soon as the output power or output current exceeds a limit threshold, for example, a maximum range of the output voltage may be 3.3 V to 21V, the output power must not exceed 100W, and the output current must not exceed 8A. In one embodiment, the sampling of the output current Iout is implemented by a resistor R8 connected between the output port XP1 and the ground terminal.

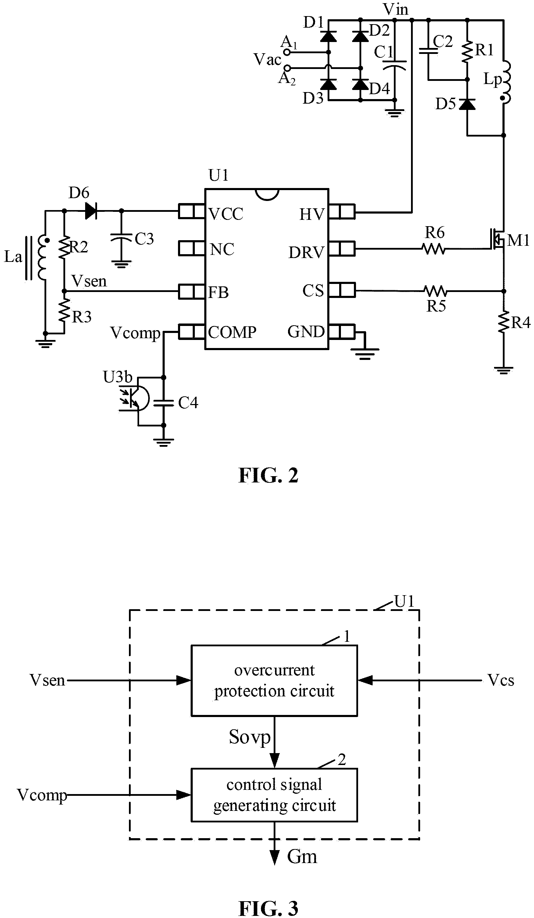

For the sake of illustration, FIG. 2 depicts a circuit diagram of the switch-mode converter according to another embodiment of the disclosure. FIG. 2 shows only the pins of the control circuit U1and circuits connected to the pins. In the embodiment illustrated by FIG. 2, the control circuit U1 comprises eight pins, which are described below.

Pin VCC is configured to receive a power supplying voltage. Specifically, after the voltage across the two terminals of the auxiliary winding La is rectified and filtered by a diode D6 and a capacitor C3, the rectified voltage is outputted to pin VCC of the control circuit U1, so as to supply power to the control circuit U1.

Pin NC is a not connected (NC) pin. In this embodiment, the NC pin does not serve any purposes, and thus it exists solely because of packaging.

Pin FB receives an auxiliary voltage sampling signal Vsen. The auxiliary voltage sampling signal Vsen is indicative of the voltage across the two terminals of the secondary winding.

Pin COMP is connected to the optical coupler equipment U3. The compensation signal Vcomp outputted from the optical coupler equipment U3 is filtered by a capacitor C4 and then outputted to pin COMP of the control circuit U1.

Pin HV is connected to the output terminal of the primary rectification circuit and is configured to receive the output voltage of the primary rectification circuit and to use the output voltage of the primary rectification as a start voltage. Specifically, after pin HV receives the start voltage, the control circuit U1 is activated, and pin VCC is switched to supply power to the control circuit U1 after the control circuit is activated.

Pin DRV is connected to the power switch M1 for outputting the switch control signal, to control the duty ratio and/or the switching frequency of the power switch M1, so that the output current and the output voltage of the switch-mode converter satisfy the selected current parameters and voltage parameters.

Pin CS is connected to the primary current sampling circuit to receive the primary current sampling signal Vcs.

Pin GND is grounded.

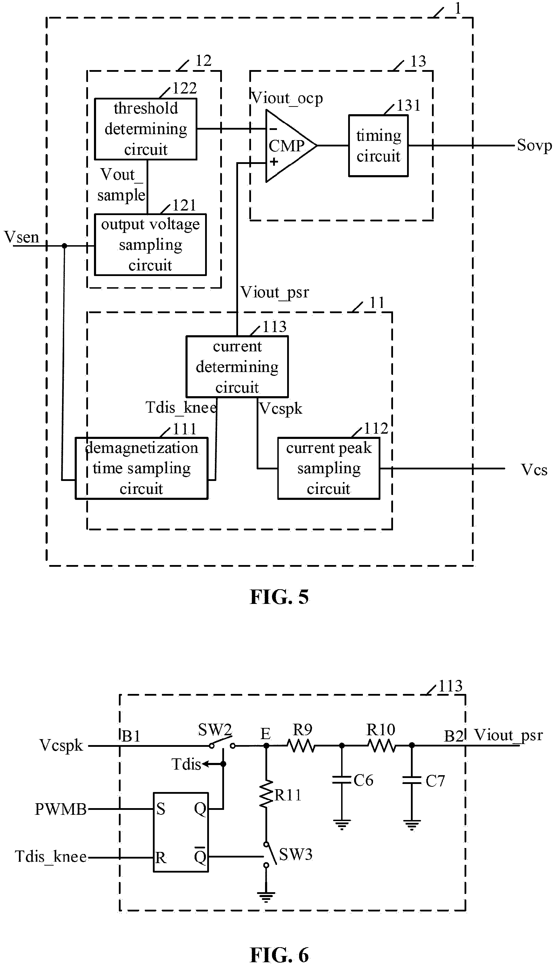

FIG. 3 is a schematic view of a control circuit according to an embodiment of the disclosure. In the embodiment illustrated by FIG. 3, the control circuit U1 comprises an overcurrent protection circuit 1 and a control signal generating circuit 2. The overcurrent protection circuit 1 is configured to obtain an overcurrent reference threshold value according to an output voltage sampling signal characterizing the output voltage of the switching converter and generate an overcurrent protection trigger signal Sovp in response to the output current sampling signal characterizing the output current of the switching converter and the overcurrent reference threshold meet a predetermined criterion. The control signal generating circuit 2 is configured to control the switching converter to enter a protection state in response to receiving a valid overcurrent protection trigger signal Sovp. Here, the predetermined criterion can be set according to the application of the control circuit U1, in order to provide the overcurrent protection and control the switching converter to enter the protection state when the overcurrent occurs. When the switch-mode converter does not have any overcurrent, the overcurrent protection circuit 1 does not output any overcurrent protection triggering signal, or an outputted overcurrent protection triggering signal Sovp is an invalid signal (i.e. an invalid overcurrent protection triggering signal). At this moment, the control signal generating circuit 2 is controlled by the compensation signal Vcomp only and generates a switch control signal Gm, so as to regulate the output voltage and/or the output current of the switch-mode converter. When the overcurrent protection circuit 1 detects that an overcurrent of the switch-mode converter occurs, the outputted overcurrent protection triggering signal Sovp is a valid signal (i.e. an valid overcurrent protection triggering signal), such that the control signal generating circuit 2 does not output the control signal Gm or the power switch M1 is turned off by the outputted control signal Gm. In the present embodiment, the corresponding relationship between the output voltage of the switching converter and the overcurrent reference threshold may refer to the overcurrent protection curve shown in FIGs 6, 7, and 8.

Further, the output voltage sampling signal is obtained by sampling the output voltage of the switching converter, and the output current sampling signal is obtained by sampling the output current of the switching converter. In this embodiment, the switching converter is configured as an isolated switching converter, as shown in FIG. 1. The overcurrent protection circuit 1 is configured to obtain the output voltage sampling signal according to an auxiliary voltage sampling signal Vsen, wherein the auxiliary voltage sampling signal is obtained by sampling a voltage at two terminals of the auxiliary winding La coupled to the primary winding Lp of the transformer in the isolated switching converter. Further, the overcurrent protection circuit 1 is configured to obtain the output current sampling signal according to the auxiliary voltage sampling signal Vsen and a primary current sampling signal, and the primary current sampling signal is used to represent the current flowing through the primary winding Lp.

In the present embodiment, the control signal generating circuit 2 receives the compensation signal Vcomp. The compensation signal is transmitted from the secondary-side circuit to the control signal generating circuit 2 through the optical coupler equipment.

In the present embodiment, the compensation signal Vcomp is configured to be indicative of the difference between the output voltage Vout and the expected voltage. The expected voltage is the charging voltage of the charging apparatus obtained by the power transfer protocol control module U2. Specifically, the charging apparatus queries a register inside the power transfer protocol control module U2 through the output port XP1 to determine an output voltage allowed by the switch-mode converter, then select a voltage parameter, and inform the power transfer protocol control module U2 of the output voltage and the voltage parameter. Hence, the power transfer protocol control module U2 can obtain the expected voltage. At the same time, as shown in FIG. 1, the power transfer protocol control module U2 is connected to the output terminal of the secondary-side circuit to obtain the output voltage Vout. Hence, a difference signal between the output voltage Vout and the expected voltage is obtained. Afterwards, the difference signal is outputted to the negative terminal of a light-emitting diode in the optical coupler U3a. The positive terminal of the light-emitting diode in the optical coupler U3a is connected to the output terminal of the secondary-side circuit through a resistor R7. The optical coupler U3a generates the compensation signal Vcomp according to the difference signal, and thus the control signal generating circuit 2 controls the power switch to be turned on or be turned off according to the compensation signal Vcomp, so that the output voltage Vout of the switch-mode converter is equal to the expected voltage.

The embodiment illustrated by FIG. 3 exemplarily demonstrates that the control signal generating circuit 2 may implement two functions that the switch-mode converter controls the duty ratio and/or the frequency of the power switch M1 when being in a normal working state and the switch-mode converter and the switch-mode converter is controlled to enter the protection state when being in an overcurrent state. However, the aforesaid technical features place no limitations on the embodiments of the disclosure. For example, the control circuit U1 may have two control signal generating circuits, namely a first control signal generating circuit and a second control signal generating circuit. When the switch-mode converter operates in the normal working state, the first control signal generating circuit operates and controls the duty ratio and/or frequency of the power switch M1, whereas the second control signal generating circuit does not operate. When the switch-mode converter is in the overcurrent state, the second control signal generating circuit operates and controls the switch-mode converter to enter a protection state, whereas the first control signal generating circuit does not operate.

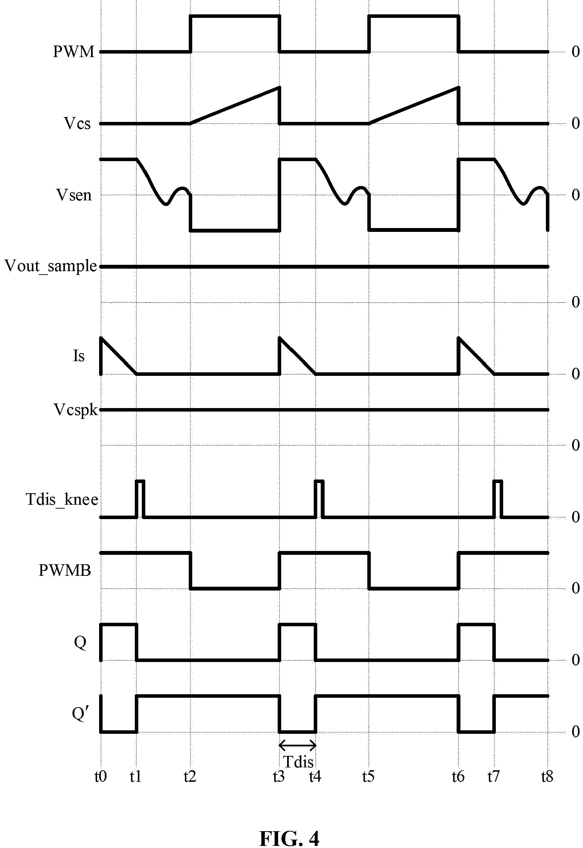

FIG. 4 is a signal waveform graph of the switch-mode converter according to an embodiment of the disclosure. In the embodiment illustrated by FIG. 4, take the isolated switching converter in FIG. 1 as an example to illustrate, and the control signal of the power switch M1 is a PWM (pulse width modulation) signal. The output voltage and/or the output current of the switch-mode converter is controlled by controlling the duty ratio and/or the frequency of the PWM signal. Hence, the regulation of the output voltage and/or output current of the switch-mode converter is implemented by the PWM signal, so as to provide an appropriate charging voltage and/or charging current to the connected charging apparatus.

One switching cycle is divided into three stages according to the working states of the power switch M1 and the transformer T1. The switching cycle is exemplified by the t2-t5 time period and described below.

In the first stage (t2-t3 time period), the PWM signal is at a high level, and the power switch M1 is turned on, the current flowing through the primary winding Lp increases gradually, and the primary winding Lp is charged.

The auxiliary voltage sampling signal Vsen is expressed by the equation below.

$$\text{Vsen} = \frac{R3}{R2 + R3} * \frac{Na}{Ns} * V\text{out}$$

Where Na denotes the number of turns of the auxiliary winding La, Ns denotes the number of turns of the secondary winding Ls, and Vout denotes the output voltage of the switch-mode converter.

Because Na, Np, R2, R3 are fixed values, the auxiliary voltage sampling signal Vsen is directly proportional to the output voltage Vout. Therefore, during the t2-t3 time period, the auxiliary voltage sampling signal Vsen remains unchanged.

The change trend of the primary current sampling signal Vcs is consistent with the change trend of the current flowing through the primary winding, that is, both are increasing gradually.

In the second stage (t3-t4 time period), demagnetization of the transformer T1 occurs. At this moment, the PWM signal is switched to a low level, and the power switch M1 is turned off. The primary winding Lp transfers energy to the secondary winding Ls, and the current flowing through the secondary winding Ls decreases continuously until the current reaches 0A.

At this moment, the auxiliary voltage sampling signal Vsen is expressed by the equation below.

$$\text{Vsen} = \frac{R3}{R2 + R3} * \frac{Na}{Ns} * V\text{out}$$

Where Na denotes the number of turns of the auxiliary winding La, and Ns denotes the number of turns of the secondary winding Lp, and Vout denotes the output voltage of the switch-mode converter.

Because Ns, Na, R2 and R3 are fixed values, the auxiliary voltage sampling signal Vsen is directly proportional to the output voltage Vout.

When the power switch M1 is turned off, the primary current sampling signal Vcs is zero.

A secondary current Is of the secondary winding of the transformer T1 decreases gradually from the peak until it reaches 0A. Since the output current Iout of the switch-mode converter is the average value of the secondary current Is, the peak value of the secondary current Is may be inferred according to the primary current sampling signal Vcs. Therefore, the output current Iout may be calculated with the demagnetization time Tdis (time t3 through time t4) of the transformer.

In the third stage (t4-t5 time period), after the current of the secondary winding Ls decreases to 0A, since the power switch M1 has not been turned on, the primary winding Lp, the power switch M1 and circuit parasitic capacitance of the line resonate. As a result, the auxiliary voltage sampling signal Vsen fluctuates about zero, and the amplitude of fluctuation decreases gradually until the power switch M1 is turned on again.

Hence, with the aforesaid method, the control signal generating circuit 2 may regulate the duty ratio and/or the switching frequency of the power switch M1, such that the output current and the output voltage of the switch-mode converter satisfy the selected current parameters and voltage parameters.

In the present embodiment, the overcurrent protection circuit 1 detects whether the switch-mode converter has overcurrent, and the outputted overcurrent protection triggering signal Sovp is a valid signal upon detection of the overcurrent of the switch-mode converter, such that the control signal generating circuit 2 does not output the switch control signal Gm, or outputs the control signal Gm to control the power switch M1 to be turned off.

FIG. 5 is a circuit diagram of an overcurrent protection circuit according to an embodiment of the disclosure. In the embodiment illustrated by FIG. 5, an overcurrent protection circuit 1 comprises an output current detection circuit 11, a reference threshold generating circuit 12 and a triggering signal generating circuit 13. The output current detection circuit 11 is configured to determine the output current sampling signal Viout_psr of the switch-mode converter according to the primary current sampling signal Vcs and the auxiliary voltage sampling signal Vsen. The reference threshold generating circuit 12 is configured to obtain the overcurrent reference threshold Viout_ocp according to the output voltage sampling signal and a predetermined overcurrent protection curve. The overcurrent protection curve is indicative of the relationship between the output voltage and the overcurrent reference threshold. The triggering signal generating circuit 13 is configured to generate an overcurrent protection triggering signal Sovp in response to that the output current sampling signal Viout_psr and the overcurrent reference threshold Viout_ocp meet predetermined criteria, thereby triggering the switch-mode converter to enter the protection state.

In the present embodiment, the output current detection circuit 11 comprises a demagnetization time sampling circuit 111, a current peak sampling circuit 112 and a current determining circuit 113. The demagnetization time sampling circuit 111 is configured to obtain a demagnetization time sampling signal Tdis_knee according to the auxiliary voltage sampling signal Vsen. The demagnetization time sampling signal Tdis_knee indicates that a transformer of the switch-mode converter is operating in a demagnetization duration. The current peak sampling circuit 112 is configured to obtain a current peak sampling signal Vcspk according to the primary current sampling signal Vcs. The current determining circuit 113 is configured to determine the output current sampling signal Viout_psr according to the demagnetization time sampling signal Tdis_knee and the current peak sampling signal Vcspk.

The demagnetization time sampling circuit 111 connects to the auxiliary voltage sampling circuit, receives the auxiliary voltage sampling signal Vsen, and obtains the demagnetization time sampling signal Tdis_knee according to the auxiliary voltage sampling signal Vsen. The demagnetization time sampling signal Tdis_knee indicates that a transformer of the switch-mode converter is operating in a demagnetization duration. Therefore, referring to FIGS. 4, 5, the demagnetization time sampling signal Tdis_knee exists during the t3-t4 time period.

The current peak sampling circuit 112 connects to the primary current sampling circuit, receives the primary current sampling signal Vcs, and obtains the current peak sampling signal Vcspk according to the primary current sampling signal Vcs. Specifically, the current peak sampling circuit 112 determines the peak of the primary current sampling signal Vcs and maintains the peak of the primary current sampling signal Vcs to output the current peak sampling signal Vcspk.

As described above, the peak of the secondary current Is may be inferred according to the primary current sampling signal Vcs. Therefore, the value of the output current Iout may be calculated with the demagnetization time Tdis of the transformer. Hence, the current determining circuit 113 connects to the output terminals of the demagnetization time sampling circuit 111 and the current peak sampling circuit 112, receives the demagnetization time sampling signal Tdis_knee and the current peak sampling signal Vcspk, and determines the output current sampling signal Viout_psr according to the demagnetization time sampling signal Tdis_knee and the current peak sampling signal Vcspk.

FIG. 6 is a circuit diagram of a current determining circuit according to an embodiment of the disclosure. As shown in FIG. 6, the current determining circuit 113 comprises an input terminal B1, an output terminal B2, a switch SW2, a switch SW3, a filter circuit and a logic circuit. The logic circuit is configured to control the switch SW2 and switch SW3 to be turned on or turned off according to the control signal PWM of the power switch M1 andthe demagnetization time sampling signal Tdis_knee indicative of the demagnetization duration of the transformer, such that the output current sampling signal Viout_psr outputted from the output terminal B2 is equal to or approximates to the secondary output current within one switching cycle.

Within one switching cycle, the switch SW2 is controlled to be turned on during the demagnetization duration while the switch SW3 is turned off, such that an input terminal of a filter circuit receives the current peak sampling signal Vcspk. Namely, the voltage at point E is the the current peak sampling signal Vcspk. Upon termination of demagnetization duration of the transformer, the switch SW2 is controlled to be turned off, and the switch SW3 is controlled to be turned on, such that the voltage of the input terminal (i.e., the voltage at point E) of the filter circuit is zero.

In the present embodiment, the filter circuit comprises two-stage RC filters. The first-order RC filter comprises a resistor R9 and a capacitor C6 which are series-connected between the input terminal of the filter circuit and a reference ground. The second-order RC filter comprises a resistor R10 and a capacitor C7 which are series-connected between a common point of the resistor R9 and the capacitor C6 and the reference ground, and the non-ground terminal of the capacitor C7 is the output terminal B2.

In an optional embodiment, the logic circuit is a RS trigger. A set terminal S of the RS trigger receives an inverter signal PWMB of the control signal PWM. A reset terminal R of the RS trigger receives the demagnetization time sampling signal Tdis_knee. The two output terminals of the RS trigger are denoted with "Q" and "Q,'" respectively. Referring to t3-t6time period in FIG. 4, at time t3, the signal PWMB switches from low level to high level, the RS trigger is set, the output signal of the output terminal Q is at high level, and the output signal of the output terminal Q' is at low level. At this moment, the switch SW2 is turned on, and the switch SW3 is turned off, the point E can receive the current peak sampling signal Vcspk. Referring to FIG. 4, at time t4, the secondary current Is decreases to 0A and it indicates that the demagnetization duration of the transformer ends. Therefore, the demagnetization time sampling signal Tdis_knee switches from low level to high level, the RS trigger can be reset, the output signal of the output terminal Q can be at low level, and the output signal of the output terminal Q' can be at high level. At this moment, the switch SW2 is turned off, and the switch SW3 is turned on, the point E can receive zero voltage until time t6, i.e., the termination of one switching cycle. Hence, the output current sampling signal Viout_psr is expressed by the equation below.

$$Viout\_psr = Vcspk * \frac{Tdis}{Tsw}$$

where Tdis denotes the demagnetization time (i.e., time period t3-t4 in FIG. 2) of the transformer, and Tsw denotes the switching cycle (i.e., time period t0-t3 or time period t3-t6) of the switch-mode converter.In this equation, the output current sampling signal Viout_psr is proportional to a product of the current peak sampling signal Vcspk and the demagnetization time Tdis, and inversely proportional to the switching cycle Tsw.

The secondary output current Iout is expressed by the equation below.

$$Iout = \frac{1}{2} * \frac{Vcspk}{R4} * \frac{Np}{Ns} * \frac{Tdis}{Tsw}$$

Therefore, the relationship between the output current sampling signal Viout_psr and Iout is expressed by the equation below.

$$Viout\_psr = 2 * R4 * Iout * \frac{Ns}{Np}$$

The above equation shows that the output current sampling signal Viout_psr is directly proportional to the output current Iout. Therefore, the output current sampling signal Viout_psr is indicative of a secondary output current Iout.

In the present embodiment, the reference threshold generating circuit 12 comprises an output voltage sampling circuit 121 and a threshold determining circuit 122.

In the present embodiment, the output voltage sampling circuit 121 is configured to obtain an output voltage sampling signal Vout_sample.

In an optional embodiment, the output voltage sampling circuit 121 samples the output voltage of the switch-mode converter to obtain the output voltage sampling signal Vout_sample.

In another optional embodiment, the output voltage sampling circuit 121 determines the output voltage sampling signal Vout_sample according to the auxiliary voltage sampling signal Vsen. The output voltage sampling signal Vout_sample is indicative of the output voltage Vout. The threshold determining circuit 122 is configured to determine the overcurrent reference threshold according to the output voltage sampling signal Vout_sample and the overcurrent protection curve.

The output voltage sampling circuit 121 is configured to determine the output voltage sampling signal Vout_sample according to the auxiliary voltage sampling signal Vsen within the demagnetization duration (i.e., within time period of the demagnetization time Tdis). The relationship between the auxiliary voltage sampling signal Vsen and the output voltage Vout is expressed by the equation below.

$$Vsen = \frac{R3}{R2 + R3} * \frac{Na}{Ns} * Vout$$

Where Vsen denotes the auxiliary voltage sampling signal, Vout denotes the output voltage of the secondary winding, Na denotes the number of turns of the auxiliary winding La, and Ns denotes the number of turns of the secondary winding Ls.

Hence, the output voltage sampling circuit 121 determines the output voltage sampling signal Vout_sample with the above equation according to the auxiliary voltage sampling signal Vsen. The output voltage sampling signal Vout_sample is equal to output voltage Vout or is in a predetermined proportion to Vout.

The threshold determining circuit 122 determines the overcurrent reference threshold according to the output voltage sampling signal Vout_sample and the overcurrent protection curve.

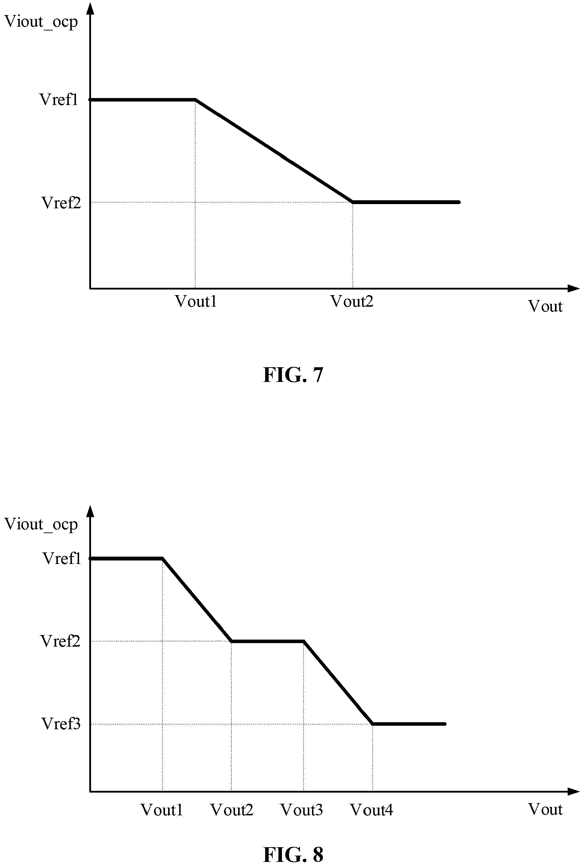

FIG. 7 is a schematic view of an overcurrent protection curve according to an embodiment of the disclosure. In the embodiment illustrated by FIG. 7, the horizontal axis represents the output voltage Vout, and the vertical axis represents the overcurrent reference threshold Viout_ocp. The overcurrent reference threshold Viout_ocp is indicative of the output current Iout.

When the output voltage is less than a first threshold Vout1, that is, Vout< Vout1, the overcurrent reference threshold Viout_ocp is equal to a first reference threshold Vref1.

When the output voltage is not less than the first threshold Vout1 and not greater than a second threshold Vout2, that is, Vout1≤Vout≤Vout2, the overcurrent reference threshold Viout_ocp varies with output voltage Vout. The overcurrent reference threshold is expressed by the equation below.

$$Viout\_ocp=K*Vout$$

where

$$K = -(Vref1 - Vref2)/(Vout1 - Vout2).$$

When the output voltage is greater than the second threshold, that is, Vout> Vout2, the overcurrent reference threshold Viout_ocp is equal to a second reference threshold Vref2.

Hence, the overcurrent reference threshold is determined according to the output voltage sampling signal.

The overcurrent protection curve shown in FIG. 7 is only intended to exemplify an embodiment of the disclosure. The embodiments of the disclosure are not restrictive of the overcurrent protection curve, and thus, any other types of curves, such as segment-style overcurrent protection curve and curve-style overcurrent protection curve, are applicable to the embodiments of the disclosure.

FIG. 8 is a schematic view of an overcurrent protection curve according to another embodiment of the disclosure. In the embodiment illustrated by FIG. 8, the horizontal axis represents the output voltage Vout, and the vertical axis represents the signal overcurrent reference threshold Viout_ocp. The overcurrent reference threshold Viout_ocp is indicative of the output current Iout.

When the output voltage is less than a first threshold Vout1, that is, Vout< Vout1, the overcurrent reference threshold Viout_ocp=Vref1.

When the output voltage is not less than the first threshold Vout1 and not greater than a second threshold Vout2, that is, Vout1≤Vout≤Vout2, the overcurrent reference threshold Viout_cop varies with Vout. The overcurrent reference threshold is expressed by the equation below.

$$Viout\_ocp=K1*Vout$$

where

$$K1 = -(Vref1 - Vref2)/(Vout1 - Vout2).$$

When the output voltage is not less than the second threshold Vout2 and not greater than a third threshold Vout3, that is, Vout2≤Vout≤Vout3, the overcurrent reference threshold Viout_ocp is equal to a second reference threshold Vref2.

When the output voltage is not less than the third threshold Vout3 and not greater than a fourth threshold Vout4, that is, Vout3≤Vout≤Vout4, the overcurrent reference threshold Viout_cop varies with Vout. In this embodiment, overcurrent reference threshold is expressed by the equation below.

$$Viout\_ocp=K2*Vout$$

where

$$K2 = -(Vref2 - Vref3)/(Vout3 - Vout4).$$

When the output voltage is greater than the fourth threshold Vout4, that is, Vout> Vout4, the overcurrent reference threshold Viout_ocp=Vref3.

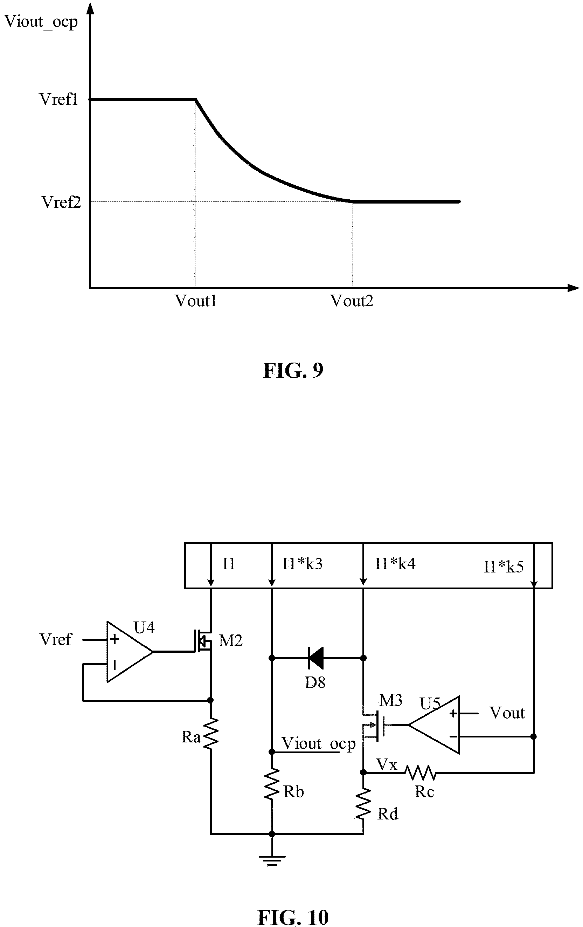

FIG. 9 is a schematic view of an overcurrent protection curve according to yet another embodiment of the disclosure. In the embodiment illustrated by FIG. 9, the horizontal axis represents the output voltage Vout, and the vertical axis represents the signal Viout_ocp. The signal Viout_ocp is indicative of the output current Iout.

When the output voltage is less than a first threshold Vout1, that is, Vout< Vout1, the overcurrent reference threshold Viout_ocp=Vref1.

When the output voltage is greater than a second threshold Vout2, that is, Vout > Vout2, overcurrent reference threshold Viout_ocp=Vref2.

When the output voltage is not less than a first threshold Vout1 and not greater than the second threshold Vout2, that is, Vout1≤Vout≤Vout2, the overcurrent reference threshold Viout_cop varies with output voltage Vout, as shown in FIG. 9.

In one optional embodiment, the reference threshold generating circuit 12 may be implemented by a processor and a memory. The memory stores one or more computer program instructions. The computer instructions are about relationship curves of the output voltage Vout and the overcurrent reference threshold Viout_ocp. The one or more computer program instructions are executed by the processor to obtain the overcurrent reference threshold Viout_ocp corresponding to the output voltage Vout.

In another optional embodiment, the reference threshold generating circuit 12 is implemented by a circuit. The optional embodiment is exemplified by the overcurrent protection curve shown in FIG. 7. FIG. 10 is a circuit diagram of a reference threshold generating circuit according to an embodiment of the disclosure. In the embodiment illustrated by FIG. 10, I1, I1*k3, I1*k4 and I1*k5 denote current values outputted by different current sources. The input signals of the reference threshold generating circuit are a reference voltage Vref and the output voltage Vout, where Vref denotes the reference voltage, and Vout denotes the output voltage. The output signal of the reference threshold generating circuit is Viout_ocp.

Referring to FIG. 10, the output signal Viout_ocp of the reference threshold generating circuit is expressed by the equation below.

$$\text{Viout\_ocp} = \text{Rb} * [\text{I1} * \text{k3} + \text{I1} * \text{k4} - \text{I(M3)}]$$

where I(M3) denotes the current flowing through switch M3 and is expressed by the equation below.

$$\text{I(M3)} = \text{I(Rd)} - \text{I(Rc)}$$

where I(Rd)=Vx/Rd, I(Rc)=I1*k5

According to the virtual ground concept in operational amplifier U5, the voltage at the non-inverting input terminal is equal to the voltage at the inverting input terminal, and thus Vout=Vx+I1*k5*Rc

The results are as follows:

$$\text{I(M3)} = \frac{\text{Vout} - \text{I1} * \text{k5} * (\text{Rc} + \text{Rd})}{\text{Rd}}$$

and

$$\text{Viout\_ocp} = \text{Rb} * (\text{I1} * \text{k3} + \text{I1} * \text{k4} - \frac{\text{Vout} - \text{I1} * \text{k5} * (\text{Rc} + \text{Rd})}{\text{Rd}})$$

where I1 =Vref/Ra

Vref1 and Vref2 in FIG. 7 are substituted into the above equations to obtain the equations below.

$$\text{Rb}*\text{I1}*\text{k3}=\text{Vref2, and Rb}*(\text{I1}*\text{k3}+\text{I1}*\text{k4})=\text{Vref1}$$

Thus, when the output voltage Vout is high and greater than Vout2, I(M3)>(I1*k4), the current in diode D8 is 0A, Viout_ocp=Rb*I1*k3. Even if the output voltage Vout is much higher, the overcurrent reference threshold V iout_ocp will remain unaffected. Therefore, Viout_ocp=Rb*I1*k3=Vref2.

When the output voltage Vout is low and less than Vout1, I(M3) current is 0A, where Viout_ocp=Rb*(I1*3+I1*k4)=Vref1. Even if the output voltage Vout is much lower, the overcurrent reference threshold Viout_ocp will remain unchanged.

When Vout1≤Vout≤Vout2, the overcurrent reference threshold Viout_ocp is expressed by the equation below.

$$\mathrm{Viout\_ocp} = \mathrm{Rb} * (\mathrm{I1} * \mathrm{k3} + \mathrm{I1} * \mathrm{k4} - \frac{\mathrm{Vout} - \mathrm{I1} * \mathrm{k5} * (\mathrm{Rc} + \mathrm{Rd})}{\mathrm{Rd}})$$

Since Rb, I1, k3, I1, k4, k5, Rc, Rd are fixed values, the above equation may be simplified to become the equation below.

$$\mathrm{Viout\_ocp} = \mathrm{K6} - K7 * Vout$$

where K6, K7 are constants.

Hence, with the aforesaid circuit, the overcurrent reference threshold Viout_ocp of different levels is outputted according to different voltage levels of the output voltage Vout, respectively. Therefore, a precise overcurrent reference threshold can be provided, regardless of variations of the input voltage or output voltage.

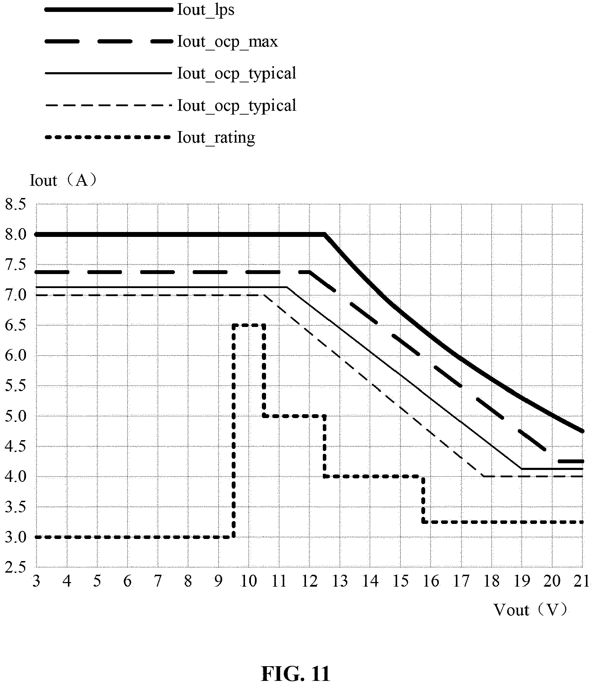

The overcurrent protection curve is provided according to LPS or provided as needed. The provision of the overcurrent protection curve according to LPS is based on the presumption that the PD power source has an output power of 65W, with LPS requirements specifying an output voltage of 3V ~ 21V and a maximum output current of 8A. The corresponding curves are shown in FIG. 11. FIG. 11 shows the respective curves for an LPS limited current Iout_lps, the maximum value of the overcurrent reference threshold Iout_ocp_max, the standard value of the overcurrent reference threshold Iout_ocp_typical, the minimum value of the overcurrent reference threshold Iout_ocp_min, an output rated current Iout_rating, and the output voltage Vout, respectively.

The uppermost curve is a curve of the LPS limited current Iout_lps, and the values of Iout_lps are different when the values of the output voltage Vout are different.

The bottom curve is a curve of the output rated current Iout_rating, and the values of the output rated current Iout_rating are different when the values of the output voltage Vout are different.

The three middle curves relate to an overcurrent reference threshold. Considering the deviation of mass production, the three curves relate to the maximum value of the overcurrent reference threshold Iout_ocp_max, the standard value of the overcurrent reference threshold Iout_ocp_typical and the minimum value of the overcurrent reference threshold Iout_ocp_min, respectively. In an embodiment of the disclosure, the overcurrent protection curve relates to the maximum value of the overcurrent reference threshold Iout_ocp_max.

Referring to FIG. 5, the triggering signal generating circuit 13 is configured to output the overcurrent protection triggering signal in response to that the output current sampling signal and the overcurrent reference threshold meet a predetermined criterion. Furthermore, the triggering signal generating circuit 13 comprises a comparison circuit. The comparison circuit is implemented by a comparator CMP. The non-inverting input terminal of the comparator CMP receives the output current sampling signal Viout_psr. The inverting input terminal of the comparator CMP receives the overcurrent reference threshold Viout_ocp. The comparator CMP outputs a comparison result of the output current sampling signal Viout_psr and the overcurrent reference threshold Viout_ocp. The triggering signal generating circuit 13 triggers overcurrent protection in response to the comparison result that the output current sampling signal is greater than the overcurrent reference threshold. To avoid wrong triggering, the triggering signal generating circuit 13 further comprises a timing circuit 131 configured to output the overcurrent protection triggering signal in response to the comparison result that the output current sampling signal remains is greater than the overcurrent reference threshold for a predetermined time.

When the output current sampling signal Viout_psr is greater than the overcurrent reference threshold Viout_ocp, the comparator CMP outputs a high level. When the output current sampling signal Viout_psr is less than the overcurrent reference threshold Viout_ocp, the comparator CMP outputs a low level. When the timing circuit 131 is configured to receive a high level, timing begins. When timing satisfies a predetermined duration, the overcurrent protection triggering signal Sovp is outputted.

Specifically, the timing circuit 131 is configured to start timing when receiving a high level, and output the overcurrent protection trigger signal Sovp when the timing meets the predetermined period of time. Further, the timing circuit 131 is configured to start timing when a high level is received, and end timing when a low level is received. Hence, when the duration in which the output current sampling signal Viout_psr is continuously greater than the overcurrent reference threshold Viout_ocp exceeds a predetermined duration, the overcurrent protection triggering signal Sovp is outputted. Hence, the timing circuit 131 prevents erroneous triggering which might result from interference to output current Iout caused by various noise, such as ESD (electro-static discharge) of the circuit and pulse groups.

In the present embodiment, the control signal generating circuit 2 is configured to control the switch-mode converter to enter a protection state according to the overcurrent protection triggering signal Sovp.

When the control signal generating circuit 2 does not receive the overcurrent protection triggering signal Sovp, the switch control signal is generated to control the power switch to be turned on or turned off, thereby allowing the output voltage and/or output current of the switch-mode converter to meet the predetermined criterion. When the control signal generating circuit 2 receives the overcurrent protection triggering signal Sovp, the power switch is controlled to turn off, thereby triggering the switch-mode converter to enter a protection state

The above embodiment is exemplified by calculating the output voltage sampling signal according to the auxiliary voltage sampling signal, but the disclosure is not limited thereto. In another embodiment, the output voltage of the switch-mode converter is directly sampled. Although the above embodiment is exemplified by calculating the output current sampling signal according to the peak current sampling signal and the demagnetization time sampling signal, the disclosure is not limited thereto. In another embodiment, the output current of the switch-mode converter is directly sampled.

In the above embodiment, the switch-mode converter is exemplified by the isolated switch-mode converter, which is not intended to place any limitations on the embodiments of the disclosure. The control circuit in the embodiments of the disclosure is applicable to various conventional switch-mode converters.

In the embodiments of the disclosure, the overcurrent reference threshold is determined according to the output voltage sampling signal and the predetermined overcurrent protection curve. When the output current sampling signal and the overcurrent reference threshold meet the predetermined criterion, the overcurrent protection triggering signal is generated, thereby triggering the switch-mode converter to enter the protection state. Thus, the overcurrent protection is provided for the switch-mode converter to reduce safety risks on the condition that Limited Power Source (LPS) requirements are met.

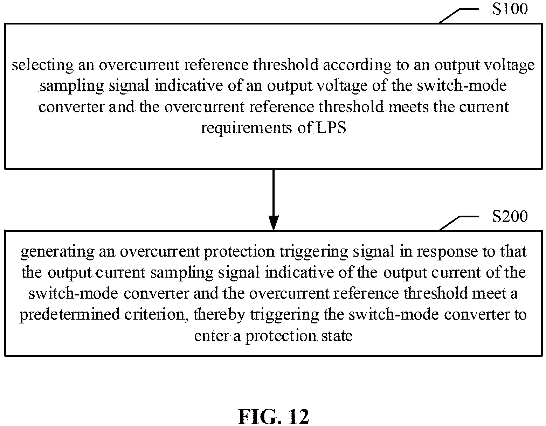

FIG. 12 is a schematic view of a process flow of a control method according to an embodiment of the disclosure. As shown in FIG. 12, the control method in an embodiment of the disclosure comprises the steps as follows:

Step S100: selecting an overcurrent reference threshold according to an output voltage sampling signal indicative of an output voltage of the switch-mode converter and the overcurrent reference threshold meets the current requirements of LPS.

selecting an overcurrent reference threshold according to an output voltage sampling signal indicative of an output voltage of the switch-mode converter and the overcurrent reference threshold meets the current requirements of LPS

Step S200: generating an overcurrent protection triggering signal in response to that the output current sampling signal indicative of the output current of the switch-mode converter and the overcurrent reference threshold meet a predetermined criterion, thereby triggering the switch-mode converter to enter a protection state.

In some embodiments, the overcurrent protection triggering signal controlls the power switch of the switch-mode converter to be turned off, thereby triggering the switch-mode converter to enter a protection state.

In some embodiments, the control method further comprises the step of generating a switch control signal in response to not generating the overcurrent protection triggering signal, so as to control the power switch of the switch-mode converter to be turned on or turned off, thereby controlling the output voltage and/or output current of the switch-mode converter to meet predetermined needs.

In some embodiments, the output voltage sampling signal is obtained by sampling the output voltage of the switch-mode converter, and the output current sampling signal is obtained by sampling the output current of the switch-mode converter.

In some embodiments, when the switch-mode converter is configured as an isolated switch-mode converter, the output voltage sampling signal is determined according to an auxiliary voltage sampling signal.

The auxiliary voltage sampling signal is obtained by sampling the voltage across the two terminals of an auxiliary winding coupled to a primary winding of the transformer in the isolated switch-mode converter.

In some embodiments, the output current sampling signal is obtained by the steps of:

obtaining a demagnetization time sampling signal according to the auxiliary voltage sampling signal, the demagnetization time sampling signal indicating that the transformer is in a demagnetization duration; and

determining the output current sampling signal according to the demagnetization time sampling signal and a primary current peak sampling signal.

In some embodiments, the predetermined criterion is that the output current sampling signal is greater than the overcurrent reference threshold for a predetermined period of time.

In some embodiments, the step of determining the output current sampling signal according to the demagnetization time sampling signal and the primary current peak sampling signal comprises:

keeping an input signal of the filter circuit of the current determining circuit within the demagnetization duration of the transformer in one switching cycle as the primary current peak sampling signal;

controlling the input signal of the filter circuit of the current determining circuit to be zero when an terminal of the demagnetization duration is detected; and

generating the output current sampling signal through the filter circuit of the current determining circuit.

In the embodiments of the disclosure, an overcurrent reference threshold is determined according to an output voltage sampling signal and a predetermined overcurrent protection curve. When an output current sampling signal and an overcurrent reference threshold meet a predetermined criterion, an overcurrent protection triggering signal is generated, thereby triggering the switch-mode converter to enter a protection state. Thus, the overcurrent protection is provided for the switch-mode converter to reduce safety risks on the condition that Limited Power Source (LPS) requirements are met.

An embodiment of the disclosure further provides an integrated circuit, applicable to a switch-mode converter. The integrated circuit comprises:

an overcurrent protection circuit configured to obtain an overcurrent reference threshold according to an output voltage sampling signal indicative of an output voltage of the switch-mode converter and a predetermined overcurrent protection curve, and generate an overcurrent protection triggering signal in response to that an output current sampling signal indicative of an output current of the switch-mode converter and the overcurrent reference threshold meet a predetermined criterion, characterized in that the overcurrent protection curve is indicative of a relationship between an output voltage of the switch-mode converter and the overcurrent reference threshold; and

a control signal generating circuit configured to control the switch-mode converter to enter a protection state in response to receiving the overcurrent protection triggering signal.

In some embodiments, the control signal generating circuit is further configured to generate a switch control signal in response to not receiving the overcurrent protection triggering signal, so as to control the power switch of the switch-mode converter to be turned on or turned off, thereby controlling an output voltage and/or output current of the switch-mode converter to meet predetermined needs.

In some embodiments, the overcurrent protection circuit comprises:

a reference threshold generating circuit configured to obtain an overcurrent reference threshold according to an output voltage sampling signal indicative of an output voltage of the switch-mode converter and a predetermined overcurrent protection curve; and

a triggering signal generating circuit configured to generate an overcurrent protection triggering signal in response to that an output current sampling signal indicative of an output current of the switch-mode converter and the overcurrent reference threshold meet a predetermined criterion.

In some embodiments, the output voltage sampling signal is obtained by sampling an output voltage of the switch-mode converter, and the output current sampling signal is obtained by sampling an output current of the switch-mode converter.

In some embodiments, when the switch-mode converter is configured as an isolated switch-mode converter, the reference threshold generating circuit comprises:

an output voltage sampling circuit configured to obtain an output voltage sampling signal according to an auxiliary voltage sampling signal, characterized in that the auxiliary voltage sampling signal is obtained by sampling the voltage across the two terminals of an auxiliary winding coupled to a primary winding of the transformer in the isolated switch-mode converter; and
a threshold determining circuit configured to determine the overcurrent reference threshold according to the output voltage sampling signal and the overcurrent protection curve.

In some embodiments, the overcurrent protection circuit further comprises an output current detection circuit configured to obtain an output current sampling signal according to the auxiliary voltage sampling signal and a primary current sampling signal, the primary current sampling signal being indicative of a current flowing through the primary winding.

In some embodiments, the output current detection circuit comprises:

a demagnetization time sampling circuit configured to obtain a demagnetization time sampling signal according to an auxiliary voltage sampling signal, the demagnetization time sampling signal indicating that the transformer of the switch-mode converter is in a demagnetization duration;

a current peak sampling circuit configured to obtain a current peak sampling signal according to the primary current sampling signal; and

a current determining circuit configured to determine the output current sampling signal according to the demagnetization time sampling signal and the current peak sampling signal.

In some embodiments, the predetermined criterion is that the output current sampling signal is greater than the overcurrent reference threshold when an terminal of the demagnetization duration is detected.

In some embodiments, the triggering signal generating circuit comprises:

a comparison circuit configured to obtain a comparison result of the output current sampling signal and the overcurrent reference threshold; and

a timing circuit configured to output the overcurrent protection triggering signal in response to the comparison result that the output current sampling signal is greater than the overcurrent reference threshold when an terminal of the demagnetization duration is detected.

In some embodiments, the current determining circuit comprises:

a first input terminal configured to receive the current peak sampling signal;

a first output terminal configured to output the output current sampling signal;

a first switch;

a filter circuit, characterized in that the filter circuit and the first switch are series-connected between the first input terminal and the first output terminal, the filter circuit comprising at least one capacitor;

a second switch, characterized in that the second switch and the first switch are series-connected between the first input terminal and a ground terminal; and

a logic circuit configured to control the first switch to be turned on and the second switch to be turned off within the transformer demagnetization duration in one duty cycle to keep an input signal of the filter circuit as the primary current peak sampling signal, and control the input signal of the filter circuit of the current determining circuit to be zero upon detection of completion of the demagnetization duration, such that the filter circuit outputs the output current sampling signal.

In the embodiments of the disclosure, an overcurrent reference threshold is determined according to an output voltage sampling signal and a predetermined overcurrent protection curve, and an overcurrent protection triggering signal is generated when an output current sampling signal and the overcurrent reference threshold meet a predetermined criterion, thereby triggering the switch-mode converter to enter a protection state. Thus, overcurrent protection is provided for the switch-mode converter to reduce safety risks on the condition that Limited Power Source (LPS) requirements are met.

The above preferred embodiments are illustrative of the disclosure rather than restrictive of the scope of the disclosure. Persons skilled in the art can make various modifications and changes to the embodiments. All amendments, equivalent replacements, and improvements made by persons skilled in the art in the embodiments without departing from the spirit and principles of the disclosure shall be deemed falling within the scope of the claims of the disclosure.

## Claims

1. A control method, applicable to a switch-mode converter, the control method comprising the steps of:

obtaining an overcurrent reference threshold (Viout_ocp) according to an output voltage sampling signal

(Vout_sample) indicative of an output voltage of the switch-mode converter; and

generating an overcurrent protection triggering signal (Sovp) in response to that an output current sampling signal (Viout_psr) indicative of an output current of the switch-mode converter and the overcurrent reference threshold meet a predetermined criterion, thereby triggering the switch-mode converter to enter a protection state.

2. The control method according to claim 1, further comprising controlling a power switch (M1) of the switch-mode converter to be turned off in response to generating a valid overcurrent protection triggering signal (Sovp), thereby triggering the switch-mode converter to enter the protection state; and

in response to generating an invalid overcurrent protection triggering signal (Sovp), generating a switch control signal to control the power switch (M1) to be turned on or turned off, such that an output voltage and/or an output current of the switch-mode converter meets predetermined needs.

3. The control method according to claim 1 or 2, **characterized in that** the overcurrent reference threshold (Viout_ocp) is configured to gradually decrease as the output voltage increases within a predetermined range of the output voltage.

4. The control method according to any one of claims 1 to 3, **characterized in**

  - **that** the output voltage sampling signal (Vout_sample) is obtained by sampling the output voltage of the switch-mode converter, and the output current sampling signal (Viout_psr) is obtained by sampling the output current of the switch-mode converter, or
  - **that** the output voltage sampling signal (Vout_sample) is determined according to an auxiliary voltage sampling signal (Vsen) when the switch-mode converter is configured as an isolated switch-mode converter, and the auxiliary voltage sampling signal (Vsen) is obtained by sampling a voltage across two terminals of an auxiliary winding coupled to a primary winding (Lp) of a transformer in the isolated switch-mode converter.

5. The control method according to any one of claims 1 to 4, **characterized in that** the output current sampling signal (Viout_psr) is obtained by the steps of:

  obtaining a demagnetization time sampling signal configured to indicate that the transformer is in a demagnetization duration according to the auxiliary voltage sampling signal (Vsen);

  obtaining the demagnetization time from the demagnetization time sampling signal;

  obtaining a current peak sampling signal representing a peak value of a primary current flowing through the primary winding; and

  determining the output current sampling signal (Viout_psr) that is proportional to a product of the current peak sampling signal and the demagnetization time, and inversely proportional to a switching cycle, and/or **characterized in that** the predetermined criterion is that the output current sampling signal (Viout_psr) is greater than the overcurrent reference threshold for predetermined time, wherein preferably the step of determining the output current sampling signal (Viout_psr) that is proportional to a product of the current peak sampling signal and the demagnetization time, and inversely proportional to a switching cycle comprises:

  keeping an input signal of a filter circuit of a current determining circuit as the current peak sampling signal within the demagnetization time of the transformer in one switching cycle;

  controlling the input signal of the filter circuit to be zero when an end of the demagnetization time is detected; and

  generating the output current sampling signal (Viout_psr) at an output terminal of the filter circuit.

6. A control circuit (U1), applicable to a switch-mode converter, the control circuit (U1) comprising:

  an overcurrent protection circuit (1) comprising a reference threshold generating circuit configured to generate an overcurrent reference threshold (Viout_ocp) according to an output voltage sampling signal (Vout_sample) indicative of an output voltage of the switch-mode converter , and a triggering signal generating circuit configured to generate an overcurrent protection triggering signal (Sovp) in response to that an output current sampling signal (Viout_psr) indicative of an output current of the switch-mode converter and the overcurrent reference threshold meet a predetermined criterion; and

  a control signal generating circuit (2) configured to control the switch-mode converter to enter a protection state in response to receiving the overcurrent protection triggering signal (Sovp).

7. The control circuit (U1) according to claim 6, **characterized in that** the control signal generating circuit (2) is further configured to generating a switch control signal to control a power switch (M1) of the switch-mode converter to be turned on or turned off in response to receiving an invalid overcurrent protection triggering signal (Sovp), such that an output voltage and/or an output current of the switch-mode converter meets predetermined needs; and control the power switch (M1) to be turned off in response to receiving a valid overcurrent protection triggering signal (Sovp).

8. The control circuit (U1) according to claim 6 or 7, **characterized in that** the overcurrent reference threshold (Viout_ocp) is configured to gradually decrease as the output voltage increases within a predetermined range of the output voltage.

9. The control circuit (U1) according to any one of claims 6 to 8, **characterized in that** the output voltage sampling signal (Vout_sample) is obtained by sampling the output voltage of the switch-mode converter, and the output current sampling signal (Viout_psr) is obtained by sampling the output current of the switch-mode converter.

10. The control circuit (U1) according to any one of claims 6 to 9, **characterized in that**, when the switch-mode converter is configured as an isolated switch-mode converter, the reference threshold generating circuit comprises:

an output voltage sampling circuit (121) configured to obtain the output voltage sampling signal (Vout_sample) according to an auxiliary voltage sampling signal (Vsen), the auxiliary voltage sampling signal (Vsen) being obtained by sampling a voltage across two terminals of an auxiliary winding coupled to a primary winding (Lp) of a transformer in the isolated switch-mode converter; and
a threshold determining circuit (122) configured to determine the overcurrent reference threshold according to the output voltage sampling signal (Vout_sample) and the predetermined overcurrent protection.

11. The control circuit (U1) according to claim 10, **characterized in that** the overcurrent protection circuit (1) further comprises an output current detection circuit (11) configured to obtain a demagnetization time sampling signal configured to indicate that the transformer is in a demagnetization duration according to the auxiliary voltage sampling signal (Vsen), obtain the demagnetization time from the demagnetization time sampling signal, obtain a current peak sampling signal representing a peak value of a primary current flowing through the primary winding (Lp), and determine the output current sampling signal (Viout_psr) to be proportional to a product of the current peak sampling signal and the demagnetization time, and inversely proportional to a switching cycle, wherein preferably the output current detection circuit (11) comprises:

a demagnetization time sampling circuit (111) configured to obtain a demagnetization time sampling signal according to the auxiliary voltage sampling signal (Vsen), the demagnetization time sampling signal indicating that the transformer of the switch-mode converter is in a demagnetization duration;
a current peak sampling circuit (112) configured to obtain the current peak sampling signal according to a primary current sampling signal; and
a current determining circuit (113) configured to determine the output current sampling signal (Viout_psr) according to the demagnetization time sampling signal and the current peak sampling signal.

12. The control circuit (U1) according to any one of claims 6 to 11, **characterized in that** the predetermined criterion is that the output current sampling signal (Viout_psr) is greater than the overcurrent reference threshold for predetermined time.

13. The control circuit (U1) according to any one of claims 6 to 12, **characterized in that** the triggering signal generating circuit comprises:

a comparison circuit configured to obtain a comparison result of the output current sampling signal (Viout_psr) and the overcurrent reference threshold; and
a timing circuit (131) configured to output the overcurrent protection triggering signal (Sovp) in response to the comparison result that the output current sampling signal (Viout_psr) is greater than the overcurrent reference threshold (Viout_ocp) for predetermined time.

14. The control circuit (U1) according to any one of claims 11 to 13, **characterized in that** the current determining circuit (113) comprises:

a first input terminal configured to receive the current peak sampling signal;
a first output terminal configured to output the output current sampling signal (Viout_psr);
a first switch;

a filter circuit, being coupled in series with the first switch between the first input terminal and the first output terminal, and comprising at least one capacitor;

a second switch, being coupled in series with the first switch between the first input terminal and a ground terminal; and

a logic circuit configured to control the first switch to be turned on and the second switch to be turned off within the demagnetization duration of the transformer in one switching cycle so as to keep an input signal of the filter circuit as the current peak sampling signal, and control the input signal of the filter circuit of the current determining circuit(113) to be zero when an end of the demagnetization duration is detected, thereby triggering the filter circuit to output the output current sampling signal (Viout_psr),

wherein preferably the logic circuit is configured as an RS trigger, wherein the RS trigger has a set terminal for receiving a switch control signal and a reset terminal for receiving the demagnetization time sampling signal, in order to generate output signals to respectively control the first and second switches.

**15.** A switch-mode converter, comprising:

a power stage circuit comprising at least one power switch (M1) connecter in series with the primary winding (Lp); and

the control circuit (U1) is configured to generate an overcurrent reference threshold (Viout_ocp) according to an output voltage sampling signal(Vout_sample) indicative of an output voltage of the switch-mode converter, generate an overcurrent protection triggering signal (Sovp) in response to that an output current sampling signal (Viout_psr) indicative of an output current of the switch-mode converter and the overcurrent reference threshold meet a predetermined criterion, and control the switch-mode converter to enter a protection state in response to receiving the overcurrent protection triggering signal (Sovp).

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

FIG. 11

S100

selecting an overcurrent reference threshold according to an output voltage sampling signal indicative of an output voltage of the switch-mode converter and the overcurrent reference threshold meets the current requirements of LPS

S200

generating an overcurrent protection triggering signal in response to that the output current sampling signal indicative of the output current of the switch-mode converter and the overcurrent reference threshold meet a predetermined criterion, thereby triggering the switch-mode converter to enter a protection state

**FIG. 12**

Europäisches
Patentamt

European
Patent Office

Office européen
des brevets

# EUROPEAN SEARCH REPORT

Application Number

EP 22 20 1717

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/334428 A1 (ARIMA SATOSHI [JP] ET AL) 31 October 2019 (2019-10-31) | 1-4, 6-10,12, 13 | INV. H02M1/32 H02M3/155 |
| A | * paragraph [0099] – paragraph [0100]; figures 1-4 * | 5,11,14 | H02M3/335 H02M1/00 |
| A | US 2008/116872 A1 (NAKAZONO KOICHI [JP]) 22 May 2008 (2008-05-22) * paragraph [0017] – paragraph [0018]; figure 3 * * paragraph [0041] – paragraph [0045] * | 1-15 | |

TECHNICAL FIELDS
SEARCHED      (IPC)

H02M

The present search report has been drawn up for all claims

| Place of search | Date of completion of the search | Examiner |
|---|---|---|
| The Hague | 20 February 2023 | Gusia, Sorin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................
& : member of the same patent family, corresponding
    document

EPO FORM 1503 03.82 (P04C01)

2

**EP 4 167 455 A1**

## ANNEX TO THE EUROPEAN SEARCH REPORT
## ON EUROPEAN PATENT APPLICATION NO.

EP 22 20 1717

20-02-2023

| Patent document cited in search report | | Publication date | Patent family member(s) | | Publication date |
|---|---|---|---|---|---|
| US 2019334428 | A1 | 31-10-2019 | CN | 110401349 A | 01-11-2019 |
| | | | JP | 7032648 B2 | 09-03-2022 |
| | | | JP | 2019193447 A | 31-10-2019 |
| | | | TW | 201946351 A | 01-12-2019 |
| | | | US | 2019334428 A1 | 31-10-2019 |
| US 2008116872 | A1 | 22-05-2008 | CN | 101188381 A | 28-05-2008 |
| | | | JP | 2008131776 A | 05-06-2008 |
| | | | US | 2008116872 A1 | 22-05-2008 |

EPO FORM P0459